Europäisches Patentamt

European Patent Office

Office européen des brevets

(11) Veröffentlichungsnummer: **0 250 823 B1**

## EUROPÄISCHE PATENTSCHRIFT

(45) Veröffentlichungstag der Patentschrift: **20.01.93**

(51) Int. Cl.⁵: **C07F 7/02**, C07F 7/18

(21) Anmeldenummer: **87107163.5**

(22) Anmeldetag: **18.05.87**

Die Akte enthält technische Angaben, die nach dem Eingang der Anmeldung eingereicht wurden und die nicht in dieser Patentschrift enthalten sind.

(54) **Verfahren zur Herstellung von Organooxyhalogensilanen.**

(30) Priorität: **27.05.86 DE 3617729**
      **27.05.86 DE 3617719**

(43) Veröffentlichungstag der Anmeldung:
**07.01.88 Patentblatt 88/01**

(45) Bekanntmachung des Hinweises auf die Patenterteilung:
**20.01.93 Patentblatt 93/03**

(84) Benannte Vertragsstaaten:
**BE DE FR GB**

(56) Entgegenhaltungen:
DE-C- 2 427 085
FR-A- 1 419 143
FR-A- 2 067 636
FR-A- 2 273 812
US-A- 2 566 956

MONATSHEFTE FÜR CHEMIE, Band 95, 1964, Seiten 1095-1098; U. WANNAGAT et al.: "Einige neue Organyloxy-methyl-chlorsilane"

CHEMICAL ABSTRACTS, Band 100, Nr. 5, 30. Januar 1984, Seite 413, Zusammenfassung Nr. 34098m, Columbus, Ohio, US; L. YANKOV et al.: "Vapor-liquid method for the preparation of homogeneous and mixed tetraalkoxy- and different alkoxychlorosilanes", & KHIM. IND. (SOFIA) 1983, (6), 248-9

Dissertation von P. Geymayer; Techn. Hochschule Graz (1963), pp. 32-42

(73) Patentinhaber: **BAYER AG**

**W-5090 Leverkusen 1 Bayerwerk(DE)**

(72) Erfinder: **Würminghausen, Thomas, Dr.**
**Am Mönchshof 11**
**W-5090 Leverkusen 3(DE)**
Erfinder: **Schneider, Karl**
**Jungbornweg 11**
**W-5000 Koeln 80(DE)**
Erfinder: **Saykowski, Franz, Dr.**
**Andreas-Gryphiusstrasse 1**
**W-5000 Koeln 80(DE)**
Erfinder: **Fröhlen, Hans Günter**
**In Holzhausen 92**
**W-5090 Leverkusen 3(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft die Herstellung von Organooxychlorsilanen. Die Herstellung erfolgt durch Reaktion des entsprechenden Chlorsilans mit Alkohol in Gegenwart eines Katalysatorsystems, bestehend aus HCl und einem Cokatalysator.

Die Herstellung von Organo-organooxychlorsilanen durch Umsetzen von Organochlorsilanen mit Alkoholen im entsprechenden stöchiometrischen Verhältnis ist bekannt (U. Wannagat und P. Geymayer, Monatshefte für Chemie 95, 1096 (1964), DE-PS 2055712, DE-PS 2427085). Diese Verfahren haben den Nachteil, daß neben dem erwünschten Produkt zusätzlich unerwünschte Mengen von Silanen mit anderem Alkoxy/Chlor-Verhältnis erhalten werden, die einen zusätzlichen Reinigungsschritt nötig machen und die Ausbeute verringern.

Überraschenderweise wurde nun gefunden, daß die störenden Mengen von Silannebenprodukten verringert werden können mit Hilfe eines Katalysatorsystems, bestehend aus dem bei der Reaktion entstehenden Chlorwasserstoff und einem Cokatalysator. Als Cokatalysatoren eignen sich saure oder basische Komponenten wie Sulfonsäuren, Schwefelsäure oder Amine.

Überraschend war weiterhin, daß die zur Bildung von unerwünschten Nebenprodukten führende Abspaltung von Alkylchlorid nicht beobachtet wurde (vergl. W. Noll, Chemie und Technologie der Silicone, Verlag Chemie GmbH, Weinheim Bergstraße, 2. Auflage 1968, S. 72).

Der Erfolg des erfindungsgemäßen Herstellungsverfahrens ist um so überraschender, als beispielsweise der Einsatz molarer Aminmengen bei der Herstellung von Alkoxychlorsilanen beschrieben wurde, wobei entsprechende Mengen Aminhydrochloride gefällt werden, so daß Lösungsmittel eingesetzt werden müssen und ein erheblicher Aufarbeitungsaufwand erforderlich ist (US-A 2.566.956 sowie das Zitat Wannagat und Geymayer).

Gegenstand der vorliegenden Erfindung ist ein Verfahren zur Herstellung von Silanen der allgemeinen Formel

$$R^1Si(OR^2)Cl_2$$

wobei

$R^1$    für einen Alkyl-, Haloalkyl- oder Alkenylrest mit 1 bis 4 C-Atomen oder für einen gegebenenfalls substituierten aromatischen Rest mit 6 bis 8 C-Atomen steht und

$R^2$    für $CH_3$-, $C_2H_5$-, $i$-$C_3H_7$-, $n$-$C_4H_9$, $i$-$C_4H_9$- oder $CH_3OC_2H_4$- steht durch Umsetzung von Organochlorsilanen mit Verbindungen der Formel

$$R^2OH,$$

wobei $R^2$ die obengenannte Bedeutung aufweist oder durch Symproportionierung eines Organochlorsilans mit Alkoxysilanen, dadurch gekennzeichnet, daß man die Umsetzung bzw. Symproportionierung in Gegenwart eines Katalysatorsystems durchführt, das aus Chlorwasserstoff, der bei der Reaktion entsteht bzw. zugegeben wird, und Aminen, Schwefelsäure oder Sulfonsäuren als Cokatalysator besteht, wobei der Cokatalysator in Mengen unter dem fünften molaren Teil, bezogen auf das verwendete Chlorsilan, eingesetzt wird.

Als Chlorsilane eignen sich beispielsweise die Silane $CH_3SiCl_3$, $C_2H_5SiCl_3$, $CH_2 = CHSiCl_3$, $ClCH_2SiCl_3$, $i$-$C_4H_9SiCl_3$, $C_6H_5SiCl_3$, $(CH_3)_2SiCl_2$.

Als cokatalytisch wirkende Amine eignen sich primäre, sekundäre oder tertiäre Amine, die auch durch Ringbildung zu Cyclen verbunden sein können, wie z.B. 1,5 Diazabicyclo(5.4.0)-undecen-5 und aromatische Amine. Bevorzugt wird als Amin Triethylamin.

Entsprechend der zu erwartenden Reaktion des zugesetzten Amins mit Chlorwasserstoff könnte natürlich auch analog Aminhydrochlorid zugesetzt werden.

Als saure Cokatalysatoren kommen beispielsweise $FSO_3H$, $ClSO_3H$ und $CF_3SO_3H$, $C_4F_9SO_3H$ oder $C_8F_{17}SO_3H$ sowie $H_2SO_4$ in Frage. Besonders geeignet sind die Sulfonsäuren, insbesondere die Perfluorbutansulfonsäure.

Die Cokatalysatoren werden in Mengen unter dem fünften molaren Teil, bezogen auf das verwendete Chlorsilan, eingesetzt. Der zehnte bis tausendste molare Teil ist besonders bevorzugt.

Da die genannten Sulfonsäuren, die Schwefelsäure oder die Amine bzw. deren Hydrochloride nur dann rasch im Sinne günstiger Produktverteilungen wirksam sind, wenn Chlorwasserstoff zugegen ist, sind Reaktionstemperaturen zwischen -30°C und +20°C, bei denen der entstehende Chlorwasserstoff im Reaktionsgemisch gut löslich ist, günstig für die Durchführung des Verfahrens. Bevorzugt sind Temperaturen unter 15°C. Bei Anwendung höherer Temperaturen muß gegebenenfalls unter Druck gearbeitet werden.

Bei dem erfindungsgmäßen Verfahren erweist es sich als vorteilhaft, daß der eingesetzte Cokatalysator nach der destillativen Abtrennung des herzustellenden Organooxychlorsilans seine Wirksamkeit im Destillationssumpf beibehält und bei Zudosierung frischen Chlorsilans und Alkohols nicht neu zugegeben werden muß.

Als Verfahrensvariante ist außerdem bei entsprechendem mengenmäßigen Einsatz die Symproportionierung eines Organochlorsilans mit einem Alkoxysilan unter Zuhilfenahme von HCl und einem der genannten Cokatalysatoren durchführbar.

Das molare Verhältnis von Chlorsilan zu Alkohol richtet sich nach der Zusammensetzung des gewünschten Produkts. Gleichgewichtsverschiebung durch Verwendung eines Überschusses eines der Reaktanden ist möglich. Destillativ abgetrennte Silane können zurückgeführt werden.

Die erfindungsgemäß hergestellten Organooxychlorsilane eignen sich als Ausgangsprodukt zur Herstellung von Silanen, die neben Alkoxy- sowie gegebenenfalls Alkylresten, weitere funktionelle Gruppen enthalten. Beispiele für solche Gruppen sind die Amino-, Amido, Oximino- und Acetoxygruppe. Die genannten Silane können bei der Herstellung kaltvulkanisierender Siliconmassen eingesetzt werden.

Die Erfindung wurde anhand der folgenden Beispiele noch näher erläutert.

Beispiel 1 (Vergleichsbeispiel)

In einem Dreihalskolben (250 ml) mit Rührer, Thermometer, Rückflußkühler und Tropftrichter, der vor dem Zutritt der Luftfeuchtigkeit geschützt war, wurden bei 20°C 110 g = 0,74 Mol Methyltrichlorsilan vorgelegt und unter Rühren 30 g = 0,65 Mol Ethanol (Molverhältnis Methyltrichlorsilan:Ethanol = 1,12:1) in 5 Minuten zugegeben. Es entwickelte sich lebhaft Chlorwasserstoff, die Temperatur sank auf -5°C ab. Nach beendeter Zugabe wurde so weit erhitzt, daß das Gemisch am Rückfluß kochte (ca. 90°C). Nach 2 Minuten wurde abgekühlt und das Reaktionsprodukt einer gaschromatographischen Analyse unterzogen.

| Ergebnis: | $CH_3SiCl_3$ | 27,6 % |
|---|---|---|
| | $CH_3Si(OC_2H_5)Cl_2$ | 39,3 % |
| | $CH_3Si(OC_2H_5)_2Cl$ | 31,5 %. |

Beispiel 2

825 g (5,5 Mol) Methyltrichlorsilan, 10,1 g (0,1 Mol) Triethylamin und 230 g (5 Mol) Ethanol wurden zur Reaktion gebracht.

Das Gaschromatogramm ergab folgende Produktzusammensetzung (in Prozent):

| Stunden nach Reaktionsbeginn | $CH_3SiCl_3$ | $CH_3Si(OC_2H_5)Cl_2$ | $CH_3Si(OC_2H_5)_2Cl$ |
|---|---|---|---|
| 4 | 11,2 | 82,0 | 5,8 |
| 6 | 11,6 | 82,0 | 5,2 |
| 21 | 11,2 | 82,0 | 5,5 |

Anschließend wurde das Produkt bis zur Siedetemperatur erhitzt, dabei wurde keine Bildung von Ethylchlorid beobachtet, die Zusammensetzung veränderte sich im Vergleich zur gaschromatographischen Analyse nur unwesentlich.

Beispiel 3

Das Beispiel 2 wurde wiederholt mit der Abänderung, daß anstelle von 0,1 Mol Triethylamin nur 0,01 bzw. 0,001 Mol Triethylamin Verwendung fanden. Als Produktzusammensetzung wurde dann registriert:
0,01/0,001 Mol Triethylamin

| Stunden nach Reaktionsbeginn | $CH_3SiCl_3$ | $CH_3Si(OC_2H_5)Cl_2$ | $CH_3Si(OC_2H_5)_2Cl$ |
|---|---|---|---|
| 4 | $^{20,8}/28,1$ | $^{58,3}/43,6$ | $^{20,2}/27,6$ |
| 6 | $^{14,8}/-$ | $^{72,2}/-$ | $^{12,3}/-$ |
| 8 | $^{11,8}/22,2$ | $^{78,4}/56,3$ | $^{9,2}/20,8$ |
| 24 | $^{11,6}/15,9$ | $^{79,5}/71,1$ | $^{8,3}/12,3$ |

## Beispiel 4

Der Versuch analog Beispiel 2 wurde mit der Abänderung wiederholt, daß anstelle von Triethylamin jeweils die Basen Diazabicycloundecen (0,001 Mol) und 4-Dimethylaminopyridin (0,001 Mol) eingesetzt wurden. Zum Vergleich wurde Ammoniumchlorid (0,5 Mol) verwendet. Die Gaschromatogramme ergaben jeweils die Prozentwerte:

| Stunden nach Reaktionsbeginn Zusatz: | $CH_3SiCl_3$ | $CH_3Si(OC_2H_5)Cl_2$ | $CH_3Si(OC_2H_5)_2Cl$ |
|---|---|---|---|
| Diazabicycloundecen (30) | 9,9 | 84,2 | 5,6 |
| 4-Dimethylaminopyridin (24) | 10,3 | 80,9 | 7,3 |
| Ammoniumchlorid (20) | 28,8 | 41,6 | 28,7 |

## Beispiel 5

Unter den gleichen Bedingungen wie im Beispiel 1 beschrieben, aber in Gegenwart von 1,8 g $C_4F_9SO_3H$ wurde folgendes Ergebnis erhalten:

| | |
|---|---|
| $CH_3SiCl_3$ | 17,8 % |
| $CH_3Si(OC_2H_5)Cl_2$ | 63,1 % |
| $CH_3Si(OC_2H_5)_2Cl$ | 17,7 %. |

## Beispiel 6

Den Einfluß einer verlängerten Verweilzeit zwischen -5°C bis 0°C (2 Stunden), zeigt folgendes Ergebnis (Einsatz wie Beispiel 5 mit Perfluorbutansulfonsäure):

| | |
|---|---|
| $CH_3SiCl_3$ | 10,0 % |
| $CH_3Si(OC_2H_5)Cl_2$ | 82,2 % |
| $CH_3Si(OC_2H_5)_2Cl$ | 6,5 %. |

## Beispiel 7

Den Einfluß einer Erhöhung des molaren Überschusses an Methyltrichlorsilan auf 50 % (Einsatz: 225 g $CH_3SiCl_3$, 46 g Ethanol, 1,8 g Perfluorbutansulfonsäure), Verweilzeit bei 0°C 3 Stunden, zeigt folgendes Ergebnis:

| | |
|---|---|
| $CH_3SiCl_3$ | 33,2 % |
| $CH_3Si(OC_2H_5)Cl_2$ | 64,5 % |
| $CH_3Si(OC_2H_5)_2Cl$ | 1,3 %. |

Beispiel 8

Die Reaktion von Methyltrichlorsilan und Ethanol im Molverhältnis 1:1 (molarer Ansatz) mit 1 ml Schwefelsäure, Verweilzeit 3 Stunden bei 0°C, zeigt folgendes Ergebnis:

| | |
|---|---|
| $CH_3 SiCl_3$ | 9,2 % |
| $CH_3 Si(OC_2 H_5)Cl_2$ | 78,4 % |
| $CH_3 Si(OC_2 H_5)_2 Cl$ | 9,0 %. |

Beispiel 9

Analog Beispiel 8, aber mit 1 ml $HSO_3 Cl$ katalysiert, wurde folgendes Ergebnis erhalten:

| | |
|---|---|
| $CH_3 SiCl_3$ | 6,1 % |
| $CH_3 Si(OC_2 H_5)Cl_2$ | 81,4 % |
| $CH_3 Si(OC_2 H_5)_2 Cl$ | 9,9 %. |

Beispiel 10

In einer dem Beispiel 1 analogen Apparatur, aber im verkleinerten Maßstab (100 ml Reaktor), wurden 37,5 g Methyltrichlorsilan (0,25 Mol) und 18,5 g n-Butanol (0,25 Mol) mit 0,5 ml $C_4 F_9 SO_3 H$ umgesetzt und 1 Stunde bei 10°C gehalten. Ergebnis (Zahlen in Klammern = Ergebnis des unkatalysierten Ansatzes):

| | |
|---|---|
| $CH_3 SiCl_3$ | 4,5 % ( 7,0 %) |
| $CH_3 Si(OC_4 H_9)Cl_2$ | 77,3 % (64,4 %) |
| $CH_3 Si(OC_4 H_9)_2 Cl$ | 15,7 % (26,1 %). |

Beispiel 11

In einer Apparatur, entsprechend Beispiel 1, wurden 149,5 g (1.0 Mol) Methyltrichlorsilan und 32 g (1,0 Mol) Methanol in Gegenwart von 1 ml Chloroschwefelsäure umgesetzt. Danach wurde 3 Stunden bei 0°C gehalten. Ergebnis (Werte in Klammern = Ergebnis aus unkatalysierter Umsetzung):

| | |
|---|---|
| $CH_3 SiCl_3$ | 4,35 % (23,0 %) |
| $CH_3 Si(OCH_3)Cl_2$ | 79,6 % (47,0 %) |
| $CH_3 Si(OCH_3)_2 Cl$ | 15,2 % (28,5 %). |

Beispiel 12

In einem 250 ml Email-Rührwerkskessel mit Heiz-(Kühl)-Mantel, Temperaturmessung, Rückflußkühler und einem Absorber für Chlorwasserstoff, wurden 72,36 kg (0,484 kmol) Methyltrichlorsilan und 0,463 kg Chlorsulfonsäure vorgelegt. Innerhalb 5 Stunden wurden bei 11 bis 12°C 20,27 kg (0,44 kmol) Ethanol unter die Flüsigkeitsoberfläche dosiert Nachdem das Reaktionsgut noch 2 Stunden, nach beendeter Ethanolzugabe, bei gleicher Temperatur gerührt worden war, wurde innerhalb 2 Stunden auf 70°C erhitzt.

Die gaschromatographische Analyse ergab folgendes Ergebnis:

EP 0 250 823 B1

| | |
|---|---|
| $CH_3SiCl_3$ | 8,9 % |
| $CH_3Si(OC_2H_5)Cl_2$ | 82,0 % |
| $CH_3Si(OC_2H_5)_2Cl$ | 6,3 % |

Durch Destillation wurden 72,0 kg $CH_3Si(OC_2H_5)Cl_2$ (Kp. 101°C) isoliert.

Beispiel 13

Ein Versuch analog Beispiel 2 wurde mit der Abänderung durchgeführt, daß statt Methyltrichlorsilan 810 g Chlormethyltrichlorsilan (4,4 Mol) und 185 g Ethanol (4,0 Mol) zur Reaktion gebracht wurden; das Gaschromatogramm ergab die Werte:

| Stunden nach Reaktionsbeginn | $ClCH_2SiCl_3$ | $ClCH_2Si(OC_2H_5)Cl_2$ | $ClCH_2Si(OC_2H_5)_2Cl$ |
|---|---|---|---|
| 4 | 9,5 | 77,5 | 7,8 |

Beispiel 14

Analog zu Beispiel 2 wurden 868 g Phenyltrichlorsilan (4,1 Mol), 132 g Methanol (4,1 Mol) ohne bzw. unter Hinzufügen von 0,01 Mol Triethylamin zur Reaktion gebracht. Die gaschromatographische Analyse zeigte für diese erfindungsgemäße Maßnahme und den Vergleich folgende Werte:

| Stunden nach Reaktionsbeginn | $C_6H_5SiCl_3$ | $C_6H_5Si(OC_2H_5)Cl_2$ | $C_6H_5Si(OC_2H_5)_2Cl$ |
|---|---|---|---|
| ohne (4/30) | $^{29}/27,3$ | $^{32,6}/33,1$ | $^{33,0}/34,5$ |
| mit (4/30) Triethylamin | $^{7,1}/4,9$ | $^{79,0}/80,1$ | $^{11,5}/10,2$ |

Beispiel 15

In einer dem Beispiel 1 analogen Apparatur wurden 52 g (0,25 mol) Tetraethoxysilan, 42,5 g (0,25 mol) Siliziumtetrachlorid und 0,5 ml Perfluorbutansulfonsäure gemischt und Chlorwasserstoff bis zur Sättigung eingeleitet. Der Vergleichsversuch wurde ohne Perfluorsulfonsäure und ohne Chlorwasserstoff durchgeführt.

6

|  | $SiCl_4$ | $C_2H_5OSiCl_3$ | $(C_2H_5O)_2SiCl_2$ | $(C_2H_5O)_3SiCl$ | $(C_2H_5O)_4Si$ |
|---|---|---|---|---|---|
| ohne Perfluorbutan- sulfonsäure | 36,7 | 0,7 | 0,4 | 0,1 | 61,5 |
| mit Perfluorbutan- sulfonsäure | 0,1 | 15,6 | 58,0 | 25,1 | 0,2 |

Beispiel 16

Die Reaktion von Siliziumtetrachlorid mit Methanol im Molverhältnis 1:1 wurde bei Raumtemperatur mit und ohne den Zusatz von 0,05 mol Triethylamin pro mol $SiCl_4$ durchgeführt. Die folgenden Gaschromatogramme wurden erhalten:

7

|  | $SiCl_4$ % | $CH_3OSiCl_3$ % | $(CH_3O)_2SiCl_2$ % | $(CH_3O)_3SiCl$ % |
|---|---|---|---|---|
| ohne Triethylamin | 31,8 | 34,8 | 13,6 | 19,2 |
| mit Triethylamin | 8,6 | 65,5 | 25,5 | 0,2 |

Beispiel 17

Bei 0°C wurden 43 g (0,33 mol) Dimethyldichlorsilan und 15,3 g (0,33 mol) Ethanol in Anwesenheit von 0,5 ml Perfluorbutansulfonsäure innerhalb 5 Minuten zur Reaktion gebracht.
Das Gaschromatogramm ergab folgende Produktzusammensetzung in Prozent:

| $(CH_3)_2SiCl_2$ | 4,0 |
|---|---|
| $(CH_3)_2Si(OC_2H_5)Cl$ | 85,1 |
| $(CH_3)_2Si(OC_2H_5)_2$ | 8,9 |

**Patentansprüche**

1.  Verfanren zur Herstellung von Silanen der allgemeinen Formel

    $R^1Si(OR^2)Cl_2$

    wobei
    $R^1$    für einen Alkyl-, Haloalkyl- oder Alkenylrest mit 1 bis 4 C-Atomen oder für einen gegebenenfalls substituierten aromatischen Rest mit 6 bis 8 C-Atomen steht und
    $R^2$    für $CH_3$-, $C_2H_5$, i-$C_3H_7$-, n-$C_4H_9$-, i-$C_4H_9$ oder $CH_3OC_2H_4$- steht,
    durch Umsetzung von entsprechenden Organochlorsilanen mit Verbindungen der Formel

    $R^2OH$,

    wobei $R^2$ die obengenannte Bedeutung aufweist

    oder durch Symproportionierung eines Organochlorsilans mit Alkoxysilanen,

    dadurch gekennzeichnet, daß

    man die Umsetzung bzw. Symproportionierung in Gegenwart eines Katalysatorsystems durchführt, das aus Chlorwasserstoff, der bei Reaktion entsteht bzw. zugegeben wird, und Aminen, Schwefelsäure oder Sulfonsäuren als Cokatalysator besteht, wobei der Cokatalysator in Mengen unter dem fünften molaren Teil, bezogen auf das verwendete Chlorsilan, eingesetzt wird.

2.  Verfahren nach Anspruch 1, dadurch gekennzeichnet, daß der Cokatalysator in Mengen zwischen dem tausendsten bis zehnten molaren Teil - bezogen auf das verwendete Chlorsilan - eingesetzt wird.

3.  Verfahren nach Anspruch 1 oder 2, dadurch gekennzeichnet, daß als Amine 1,5 Diazabicyclo (5.4.0)-undecen-5, 4-Dimethylaminopyridin oder Triethylamin eingesetzt werden.

4.  Verfahren nach Anspruch 1 oder 2, dadurch gekennzeichnet, daß als Sulfonsäuren $FSO_3H$, $ClSO_3H$, $CF_3SO_3H$, $C_4F_9SO_3H$ oder $C_8F_{17}SO_3H$, bevorzugt $C_4F_9SO_3H$, eingesetzt werden.

**Claims**

1.  A process for the production of silanes corresponding to the following general formula

    $R^1Si(OR^2)Cl_2$

in which

R[1]    represents an alkyl, haloalkyl or alkenyl radical containing 1 to 4 C atoms or an optionally substituted aromatic radical containing 6 to 8 C atoms and

R[2]    represents $CH_3-$, $C_2H_5$, $i-C_3H_7-$, $n-C_4H_9-$, $i-C_4H_9$ or $CH_3OC_2H_4-$

by reaction of corresponding organochlorosilanes with compounds corresponding to the formula

$R^2OH$

in which R[2] is as defined above,

or by symproportionation of an organochlorosilane with alkoxysilanes,

characterized in that

the reaction or the symproportionation is carried out in the presence of a catalyst system consisting of hydrogen chloride, which is formed or added during the reaction, and amines, sulfuric acid or sulfonic acids as co-catalyst, the co-catalyst being used in quantities of less than one fifth of the molar quantity, based on the chlorosilane used.

2.    A process as claimed in claim 1, characterized in that the co-catalyst is used in quantities of one thousandth to one tenth of the molar quantity, based on the chlorosilane used.

3.    A process as claimed in claim 1 or 2, characterized in that 1,5-diazabicyclo-(5.4.0)-undec-5-ene, 4-dimethylaminopyridine or triethylamine is used as the amine.

4.    A process as claimed in claim 1 or 2, characterized in that $FSO_3H$, $ClSO_3H$, $CF_3SO_3H$, $C_4F_9SO_3H$ or $C_8F_{17}SO_3H$, preferably $C_4F_9SO_3H$, are used as the sulfonic acids.

**Revendications**

1.    Procédé de production de silanes de formule générale

$R^1Si(OR^2)Cl_2$

dans laquelle

R[1] représente un reste alkyle, halogénalkyle ou alcényle ayant 1 à 4 atomes de carbone ou un reste aromatique de 6 à 8 atomes de carbone éventuellement substitué et

R[2] représente un groupe $CH_3-$, $C_2H_5-$, $i-C_3H_7-$, $n-C_4H_9-$, $i-C_4H_9$ ou $CH_3OC_2H_4-$,

par réaction d'organochlorosilanes correspondants avec des composés de formule

$R^2OH$,

dans laquelle R[2] a la définition mentionnée ci-dessus

ou par sym.-proportionation d'un organochlorosilane avec des alkoxysilanes,

caractérisé en ce qu'on conduit la réaction ou la sym-proportionation en présence d'une composition de catalyseur qui est constituée de chlorure d'hydrogène, qui est produit ou ajouté au cours de la réaction, et d'un cocatalyseur formé d'amines, d'acide sulfurique ou d'acides sulfoniques, le cocatalyseur étant utilisé en quantités inférieures à la cinquième partie molaire, par rapport au chlorosilane utilisé.

2.    Procédé suivant la revendication 1, caractérisé en ce que le cocatalyseur est utilisé en quantités comprises entre la millième et la dixième parties molaires, par rapport au chlorosilane utilisé.

3.    Procédé suivant la revendication 1 ou 2, caractérisé en ce qu'on utilise comme amines la 1,5-diazabicyclo(5.4.0)undécène-5,4-diméthylaminopyridine ou la triéthylamine.

4.    Procédé suivant la revendication 1 ou 2, caractérisé en ce qu'on utilise comme acides sulfoniques $FSO_3H$, $ClSO_3H$, $CF_3SO_3H$, $C_4F_9SO_3H$ ou $C_8F_{17}SO_3H$, de préférence $C_4F_9SO_3H$.